Europäisches Patentamt

European Patent Office

Office européen des brevets

(19)

(11) Numéro de publication : **0 053 406**
**B1**

# (12) FASCICULE DE BREVET EUROPÉEN

(45) Date de publication du fascicule du brevet :
07.08.85

(21) Numéro de dépôt : **81201187.2**

(22) Date de dépôt : **27.10.81**

(51) Int. Cl.⁴ : **C 22 B   7/00, C 22 B   1/00,
C 22 B 15/14**

(54) **Procédé pour extraire des métaux non-ferreux de déchets ferrés.**

(30) Priorité : 28.11.80 LU 82970

(43) Date de publication de la demande :
09.06.82 Bulletin 82/23

(45) Mention de la délivrance du brevet :
07.08.85 Bulletin 85/32

(84) Etats contractants désignés :
**BE DE FR GB SE**

(56) Documents cités :
AU-B-   469 773
DE-A- 2 006 662
DE-A- 2 045 174
DE-B- 1 783 144
DE-C-   446 665
FR-A- 2 307 881
LU-A-     68 939
V. TAFEL: "Lehrbuch der Metallhüttenkunde", vol. 1,
1927 S. HIRZEL LEIPZIG (DE) page 297

(73) Titulaire : **METALLURGIE HOBOKEN-OVERPELT**
**Société anonyme dite:**
**8, rue Montagne du Parc**
**B-1000 Bruxelles (BE)**

(72) Inventeur : **van Hecke, Michel C.F.**
**Hendrik Consciencelaan 11**
**B-2630 Aartselaar (BE)**
Inventeur : **Fontainas, Luc M.**
**Tentoonstellingslaan 19**
**B-2020 Antwerpen (BE)**

(74) Mandataire : **Saelemaekers, Juul et al**
**METALLURGIE HOBOKEN-OVERPELT A. Greinerstraat 14**
**B-2710 Hoboken (BE)**

## Description

La présente invention se rapporte à un procédé pour extraire du cuivre et des métaux précieux de déchets ferrés contenant de tels métaux, suivant lequel on chauffe les déchets dans un réacteur en présence d'un matériau cuivreux et d'un scorifiant pour le fer de façon à collecter dans une phase cuivreuse au moins une partie du cuivre et des métaux précieux contenus dans les déchets et à scorifier la majeure partie du fer contenu dans les déchets.

Les déchets ferrés visés dans la présente demande sont par exemple des déchets téléphoniques ou électroniques, des catalyseurs usés ou refusés, des moteurs électriques, des pièces d'automobile, etc...

Un procédé du type défini ci-dessus pour l'extraction du cuivre, de l'étain et du plomb est décrit dans le document AU-B-469 773. Dans ce procédé connu, on prépare une charge contenant :

— des déchets ferrés, qui contiennent du cuivre (et normalement des métaux précieux), tels que des armatures, des bobines inductrices et des pièces de moteurs,

— des matériaux cuivreux tels des scories, cendres et déchets cuprifères, et

— un scorifiant pour le fer tel de la silice, et on fond cette charge sous une flamme neutre dans un convertisseur rotatif à soufflage par le haut, en produisant ainsi d'une part un cuivre noir très impur, contenant une partie des métaux non-ferreux contenus originalement dans les déchets ferrés et d'autre part une scorie ferrugineuse contenant la majeure partie du fer contenu originalement dans les déchets ferrés.

Ce procédé connu exige donc un apport de chaleur pour la fusion de la charge et il produit une phase cuivreuse (cuivre noir) très impure, qui doit encore subir au moins une opération de raffinage pyrométallurgique, avant qu'on ne puisse procéder à son raffinage électrolytique. Au cours de ce raffinage électrolytique on récupère les métaux de valeur provenant des déchets ferrés, par exemple sous la forme de boue d'électrolyse lorsqu'il s'agit de métaux précieux. L'opération de raffinage pyrométallurgique susdite consiste en un convertissage pour éliminer par scorification ou volatilisation des éléments comme Fe, Al, Zn, Pb, Ni et Sb, et peut produire soit directement du cuivre pour anodes, lorsque le convertissage est très poussé, soit du cuivre blister qui doit encore subir un raffinage oxydant pour donner du cuivre pour anodes.

Le but de la présente invention est de fournir un procédé continu du type défini ci-dessus, qui, une fois démarré, n'exige plus d'apport de chaleur et qui produit une phase cuivreuse constituée de cuivre blister ou de cuivre pour anodes.

Selon l'invention

— on utilise en tant que réacteur un convertisseur à soufflage latéral,

— on forme un bain de cuivre fondu dans le convertisseur,

— on ajoute les déchets et le scorifiant pour le fer progressivement au bain de cuivre, dans lequel on insuffle un gaz contenant de l'oxygène, en soumettant ainsi les déchets à une fusion oxydante en présence d'une phase cuivreuse fondue et d'un scorifiant pour le fer, ce qui mène à la collecte de cuivre et de métaux précieux par la phase cuivreuse et à la formation d'une scorie ferrugineuse,

— on évacue périodiquement du convertisseur de la scorie ferrugineuse et, si nécessaire, une fraction de la phase cuivreuse de telle manière que l'on peut à volonté continuer à ajouter progressivement des déchets et du scorifiant, et

— on maintient la température au sein du bain en-dessous de 1 400 °C.

La fusion oxydante des déchets ferrés étant très exothermique, la température au sein du bain cuivreux tend à s'accroître. Il est essentiel de veiller à ce que cette température reste en-dessous de 1 400 °C et, de préférence, en-dessous de 1 250 °C, parce qu'autrement les pertes par volatilisation de métaux de valeur tels les métaux précieux deviennent sensibles. A cet effet, on peut faire varier la vitesse d'alimentation des déchets ferrés, injecter dans le bain cuivreux des gaz inertes tels l'azote, ajouter au bain cuivreux des matières refroidissantes telles des scories à recycler, et/ou refroidir les parois extérieures du convertisseur.

Il est donc clair que, une fois que l'on dispose d'un bain de cuivre fondu de départ, on peut traiter par le procédé de l'invention des quantités illimitées de déchets ferrés sans le moindre apport de chaleur. On n'a qu'à évacuer régulièrement du réacteur, dans lequel on opère, la scorie ferrugineuse qui se forme, et de temps en temps une fraction de la phase cuivreuse, la masse de celle-ci augmentant lentement à mesure que l'on charge des nouvelles quantités de déchets ferrés.

Si la scorie ferrugineuse, que l'on produit, est trop riche en métaux de valeur, par exemple en cuivre et en nickel, pour être rejetée, ces métaux peuvent être facilement extraits de cette scorie, par exemple par un traitement réducteur (« slag cleaning ») de celle-ci dans un four électrique.

Comme bain de cuivre fondu on utilise préférentiellement un bain de cuivre blister ou de cuivre pour anodes. On pourrait également utiliser un bain de cuivre pur ou un bain de cuivre très impur, par exemple de cuivre noir ; cependant, il va de soi que la mise en œuvre d'un bain de cuivre pur est peu économique et que la mise en œuvre d'un bain de cuivre très impur pose des problèmes de contrôle de la température, l'injection d'un gaz contenant de l'oxygène dans du cuivre très impur étant déjà en soi très exothermique.

Comme convertisseur à soufflage latéral on peut utiliser un convertisseur du type Pierce-Smith ou un convertisseur à syphon (Hoboken Converter). La paroi d'un convertisseur à soufflage latéral est constituée d'une tôle métallique munie d'un garnissage réfractaire relativement épais. Alors que les convertisseurs connus ont une épaisseur de paroi d'environ 40 cm, celui qu'on préfère pour réaliser le procédé de la présente invention a une épaisseur de paroi de moins d'environ 20 cm pour permettre le passage maximal de calories vers l'extérieur du convertisseur.

Exemple

Dans un convertisseur à soufflage latéral ayant une épaisseur de paroi de 11,5 cm on souffle 1 700 kg de cuivre noir titrant 81,8 % de Cu et 264 ppm d'Ag, en utilisant 127 kg de sable comme scorifiant, jusqu'à l'obtention de cuivre blister.

Ensuite, on ajoute 1 000 kg de déchets ferrés titrant 800 ppm d'Ag et 16 % de Cu, à une vitesse de 361 kg/heure, et 550 kg de sable à une vitesse de 198 kg/heure, en soufflant 8 Nm³/minute d'air par les tuyères.

On obtient 1 200 kg de cuivre blister contenant 951 ppm d'Ag.

On retrouve donc 91,3 % de l'Ag et 76,5 % du Cu de l'alimentation combinée dans le blister final.

On aura compris que le procédé de la présente invention permet d'obtenir en une seule opération une phase collectrice des métaux non-ferreux de haute qualité : du cuivre blister ou du cuivre pour anodes.

**Revendications**

1. Procédé pour extraire du cuivre et des métaux précieux de déchets ferrés contenant de tels métaux, suivant lequel on chauffe les déchets dans un réacteur en présence d'un matériau cuivreux et d'un scorifiant pour le fer de façon à collecter dans une phase cuivreuse au moins une partie du cuivre et des métaux précieux contenus dans les déchets et à scorifier la majeure partie du fer contenu dans les déchets, procédé selon lequel,
— on utilise en tant que réacteur un convertisseur à soufflage latéral,
— on forme un bain de cuivre fondu dans le convertisseur,
— on ajoute les déchets et le scorifiant pour le fer progressivement au bain de cuivre, dans lequel on insuffle un gaz contenant de l'oxygène, en soumettant ainsi les déchets à une fusion oxydante en présence d'une phase cuivreuse fondue et d'un scorifiant pour le fer, ce qui mène à la collecte de cuivre et de métaux précieux par la phase cuivreuse et à la formation d'une scorie ferrugineuse,
— on évacue périodiquement du convertisseur de la scorie ferrugineuse et, si nécessaire, une fraction de la phase cuivreuse de telle manière que l'on peut à volonté continuer à ajouter progressivement des déchets et du scorifiant, et
— on maintient la température au sein du bain en-dessous de 1 400 °C.

2. Procédé selon la revendication 1, caractérisé en ce qu'on maintient la température au sein du bain en-dessous de 1 250 °C.

3. Procédé selon la revendication 1 ou 2, caractérisé en ce qu'on ajoute une matière refroidissante au bain de cuivre fondu.

4. Procédé selon la revendication 1, 2 ou 3, caractérisé en ce qu'on injecte un gaz inerte dans le bain de cuivre fondu.

5. Procédé selon la revendication 1, caractérisé en ce qu'au moins une partie de la paroi du convertisseur présente une épaisseur de moins de 20 cm.

6. Procédé selon l'une des revendications 1 à 5, caractérisé en ce qu'on refroidit au moins une partie de la paroi du convertisseur en mettant la face extérieure de cette partie en contact avec un courant d'air ou d'eau.

**Claims**

1. A process for extracting copper and precious metals from iron-bearing scraps containing such metals, in which the scraps are heated in a reactor in the presence of a copper-bearing material and a slagging agent for iron so as to collect in a copper phase at least part of the copper and of the precious metals contained in the scraps and to slag the major part of the iron contained in the scraps, process according to which
— a side-blown converter is used as the reactor,
— a bath of molten copper is formed in the convertor,
— the scraps and the slagging agent for iron are added progressively to the copper bath, in which an oxygen containing gas is blown, thereby subjecting the scraps to an oxidizing melting in the presence of a molten copper phase and a slagging agent for iron, which results in the collecting of copper and precious metals by the copper phase and in the formation of a ferrous slag,
— ferrous slag and, if necessary, a fraction of the copper phase are periodically discharged from the converter in such a way that the progressive addition of scraps and slagging agent can be continued at will, and
— the temperature within the bath is kept below 1 400 °C.

2. The process according to claim 1, characterized in that the temperature within the bath is kept below 1 250 °C.

3. The process according to claim 1 or 2, characterized in that a cooling material is added to the molten copper bath.

4. The process according to claim 1, 2 or 3, characterized in that an inert gas is injected into the molten copper bath.

5. The process according to claim 1, characterized in that at least part of the wall of the converter has a thickness of less than 20 cm.

6. The process according to any of claims 1 to 5, characterized in that at least part of the converter wall is cooled by contacting the outer face of this part with an air or water current.

## Patentansprüche

1. Verfahren zur Extraktion von Kupfer und wertvollen Metallen aus eisenhaltigen Abfällen, die solche Metalle enthalten, wobei man die Abfälle in Gegenwart eines kupferhaltigen Materials und eines Schlackenbildners für das Eisen in der Weise erhitzt, daß in einer kupfrigen Phase zumindest ein Teil des Kupfers und der wertvollen Metalle, die in den Abfällen enthalten waren, gesammelt werden und der größere Teil des Eisens aus den Abfällen verschlackt wird, gekennzeichnet durch folgende Maßnahmen :

— man verwendet als Reaktor einen Konverter mit seitlicher Lufteinblasung,

— man bildet in dem Konverter ein Bad aus geschmolzenem Kupfer,

— man fügt die Abfälle und den Schlackenbildner für das Eisen nach und nach dem Kupferbad zu, in das man ein sauerstoffhaltiges Gas einbläst, so daß die Abfälle einer oxidierenden Schmelzung in Gegenwart einer geschmolzenen kupfrigen Phase und eines Schlackenbildners für das Eisen unterworfen werden, was zu einer Sammlung des Kupfers und der wertvollen Metalle durch die kupfrige Phase und zur Bildung einer eisenhaltigen Schlacke führt,

— man entnimmt dem Konverter periodisch eisenhaltige Schlacke und, falls erforderlich, einen Teil der kupfrigen Phase in der Weise, daß man nach Belieben die schrittweise Zugabe der Abfälle und des Schlackenbildners fortsetzen kann,

— man hält die Temperatur im Badinneren unterhalb 1 400 °C.

2. Verfahren nach Anspruch 1, dadurch gekennzeichnet, daß man die Temperatur im Badinneren unterhalb 1 250 °C hält.

3. Verfahren nach Anspruch 1 oder 2, dadurch gekennzeichnet, daß man dem geschmolzenen Kupferbad einen kühlenden Stoff zufügt.

4. Verfahren nach Anspruch 1, 2 oder 3, dadurch gekennzeichnet, daß man ein Inertgas in das geschmolzene Kupferbad injiziert.

5. Verfahren nach Anspruch 1, dadurch gekennzeichnet, daß zumindest ein Teil der Wand des Konverters eine Wandstärke von weniger als 20 cm aufweist.

6. Verfahren nach einem der Ansprüche 1 bis 5, dadurch gekennzeichnet, daß man zumindest einen Teil der Wand des Konverters kühlt, indem man dessen Außenfläche mit einem Strom von Luft oder Wasser in Berührung bringt.